# EUROPEAN PATENT SPECIFICATION

(11) **EP 0 528 000 B1**
(45) Date of publication and mention of the grant of the patent: **29.03.1995**
(21) Application number: 92906140.6
(22) Date of filing: 21.02.1992
(51) Int. Cl.: B65G 1/12

(54) **DISPENSING STORAGE**
SPEICHER MIT AUSGABEVORRICHTUNG
DISPOSITIF DE STOCKAGE MUNI D'UN SYSTEME DE DISTRIBUTION

(30) Priority: 06.03.1991 FI 911119
(43) Date of publication of application: 24.02.1993
(73) Proprietor: KASTEN- HÖVIK OY, 08150 Lohja (FI)
(72) Inventor: MERILÄINEN, Esko, SF-08500 Lohja (FI); LINDEVALL, Tapio, SF-08700 Virkkala (FI)
(74) Representative: Long, Edward Anthony
(86) International application number: FI9200048
(87) International publication number: WO9215510

(56) References cited:
- CH-B- 505 741
- US-A- 3 456 817

## Description

The object of this invention is a dispensing storage for storing and dispensing of articles that are stored as batches of which each contains only one kind of articles. The storing and dispensing for assembly of assembly parts is mentioned as a particular application example of the invention.

The basic structure of the storage is comprised of storage units supported in a controlled manner on an endless, vertical circulating system; i.e. the said structure is based on the known paternoster construction e.g. CH-B-505 741.

In storages based on the said structure it is known to controll an individual storage unit to a dispensing station on the basis of its own address. Similarly, the goods to be stored can be fed to their own storage station by calling the storage place to the supplementing station.

In the event that the storage is employed for the storage and dispensing of articles of which there are several kinds arranged in small storage batches of the particular kind, the rational use of the storage space necessitates several of the said batches to be located in one basic storage unit. Thus, each basic storage unit, as each of the paternoster storage shelves, has its own sub-storage system. As an example of the storage of the kind can be mentioned the componenet storage for the assembly of electronics devices.

Articles of the said kind can be brought to the dispensing point by calling to the dispensing station the basic storage unit containing the storage batch of the desired article. The party in need of the article must then pick up the desired article or number of these articles from the relevant storage batch. The number of required article kinds may be considerable. If this is the case, then several kinds of articles must be located in each individual basic storage unit.

In an activity employing a typical storage unit of this kind the person executing the assembling of product performs his work next to a purpose-built worktop, the said worktop being adjacent to the storage dispensing station. Given such a setting, it would be rational for the person not to have to reach out for the necessary parts and instead have the necessary parts at a handy distance. The dispensing storage in accordance with the invention brings an essential improvement in the said handy distance in that the batches of articles per article kind have been positioned on supports that can be turned out from the basic storage unit.

In the event that the said capability to be turned out is accompanied by a control system that is aware of the location of batches of articles on the support, the batches of articles can be guided in a selectable manner to the desired dispensing point. The said dispensing point may, for instance, be a dispensing aperture connected to a worktop adjacent to the dispensing station. The desired article batch is guided underneath the said aperture and the person assembling a product then takes the required amount of articles through the aperture. The "recipe" for the product being assembled is advantageously contained in the memory of the system in charge of the storage. Consequently, the products are guided in appropriate sequence to the assembly point and information is provided concerning the number of articles to be picked from each storage batch.

The following drawings are presented as a means of clarifying the invention in greater detail. Of these,
Figure 1 depicts a side view of the dispensing storage in accordance with the invention,
Figure 2 depicts a partial enlargement of the dispensing storage's dispensing/supplementing station section of the storage, and
Figure 3 depicts a cross-sectional view of the dispensing station as seen from above.

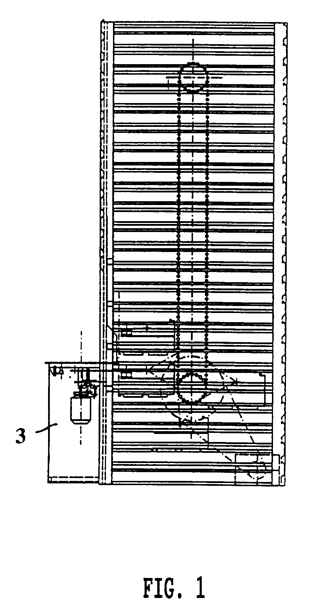

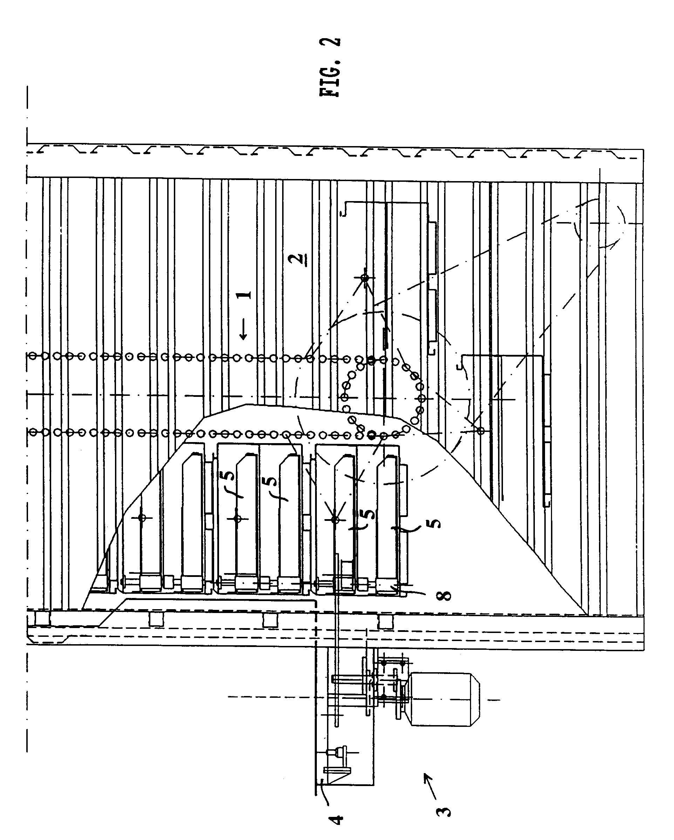

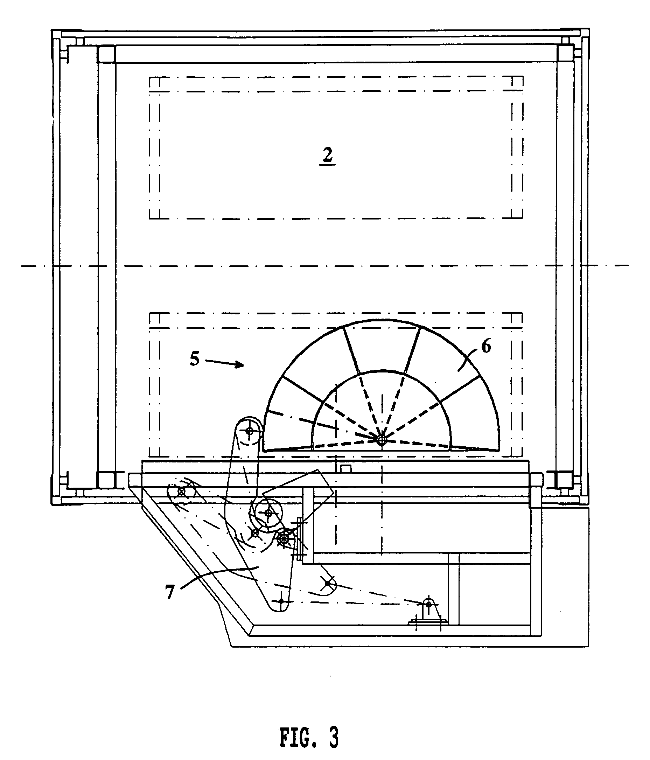

The basic structure of the dispensing storage depicted in Fig. 1 is composed of a conventional paternoster storage containing an appropriate number of shelves or their equivalent, supported and guided by an endless vertically circulating track system, the said shelves or their equivalent forming the basic storage units. The lower part of the storage houses on one side a dispensing station 3, whose structural details are given in Figs. 2 and 3.

Each storage shelf (i.e. basic storage unit) houses supports 5 for article specific batches, which supports can be swung around a vertical shaft 8. The implementation solution depicted in the figures embodies two supports 5 on each shelf. The supports 5 referred to in the drawings consist of semi-circular plates, the said supports being used to support product specific storage compartments 6 placed in a sectorial manner. The supporting plates 5 can be swung around the shaft 8 out to desired swing-out position, in which position the storage compartment 6 is on hand for picking the desired articles out.

The equipment houses an operating lever system 7 that can be turned into the storage, the said operating lever system enabling the article specific storage compartment 6 to be guided into position for picking articles out of it. The operating lever system 7 is advantageously part of the dispensing storage's dispensing station 3. To accomplish the turning of the operating lever system, the equipment is provided, for example, with a pneumatically or hydraulically operated cylinder-piston device by means of which the operating lever is turned so that it comes into contact with the periphery of the supporting disc 5. The periphery of the supporting disc is provided with suitable friction material and the operating lever is provided with a turning device with a corresponding friction device; e.g. a cogged belt. With the operating lever 7 in contact with the periphery of the supporting disc 5, the disc is rotated until the desired storage compartment 6 reaches the dispensing station's picking-out position. The said rotation is achieved advantageously under the supervision of an organ controlling the rotation position of the supporting disc 5.

The actual dispensing station 3 consists advantageously of a worktop purpose-built for the assembly work stage or assembling. One at a time, the operating lever system 7 turns selected supporting discs 5 and the storage compartments contained on them into position under the aperture in the worktop.

The fixed control point for stopping the paternoster mechanism is most advantageously connected to the dispensing station 3 as this ensures that the supporting discs 5 will always be in the correct position with respect to the dispensing station. This is particularly essential if the dispensing station has been so constructed as to be vertically adjustable; e.g. so that it can be adapted to the operators' dimensions. This adjustment measure requires no adjustment of the actual paternoster mechanism.

A dispensing storage implemented in accordance with the principle described above enables the application of a high degree of automation. Data on the priority and amount of parts needed for assembling a particular product can be entered into the control system. When this is done, the control system sees to it that the storage compartment of the correct parts arrive in the correct sequence at the workstation's picking-out point and the control system also informs the assembly person of the number of parts required. The person assembling the product needs only to pick out the said number of parts and then acknowledge that he has picked them out.

Supplementing of the storage can be implemented in a manner that is the reverse of the above mentioned dispensing procedure and controlled by storage bookkeeping. Supplementing may be done via the same station or via station located elsewhere in the storage area. The supplementing station may, for instance, be located on the opposite side of the storage or at a level different to the one that the dispensing station is on. There may be more than one dispensing station per storage.

## Claims

1. A dispensing storage for different articles that are stored in batches of the same kind, as for assembly purposes, in which the batches of articles are stored on supports (5) supported by an endless vertically circulating track system (1) and guided article specifically to at least one dispensing /supplementing station (3), **characterized** in that the supports (5) can be swung out to the dispensing/supplementing station (3) away from the path of movement of the vertically circulating track system.

2. A proportioning storage in accordance with claim 1, **characterized** in that each support (5) can be swung around a vertical shaft.

3. A proportioning storage in accordance with claim 2, **characterized** in that the supports (5) are essentially semi-circular in shape.

4. A proportioning storage in accordance with any of the above claims 1-3, **characterized** in that the dispensing/supplementing station consists of an operating lever system (7) that can be turned into contact with a support (5) for the purpose of turning the support out towards the dispensing/supplementing station in a controlled manner.

5. A proportioning storage in accordance with any of the above claims, **characterized** in that the stopping control point of the vertically circulating track system is connected to the dispensing/supplementing module and that the dispensing/supplementing station's location is vertically adjustable.

## Patentansprüche

1. Ausgabemagazin für verschiedene Artikel, die zu Montagezwecken in gleichartigen Losen gelagert werden, und wobei die Artikellose auf Tabletts (5) gelagert werden, die an einem vertikal angeordneten, endlos umlaufenden Paternoster-Schienensystem (1) befestigt sind und artikelspezifisch zu mindestens einer Ausgabe-/Auffüllstation (3) befördert werden; **dadurch gekennzeichnet,** daß die Tabletts (5) aus der Bewegungsrichtung des senkrecht umlaufenden Schienensystems nach außen geschwenkt und so der Ausgabe-/Auffüllstation (3) präsentiert werden können.

2. Ausgabemagazin nach Anspruch 1, **dadurch gekennzeichnet,** daß jedes Tablett (5) um eine senkrechte Achse geschwenkt werden kann.

3. Ausgabemagazin nach Anspruch 2, **dadurch gekennzeichnet,** daß die Tabletts (5) im wesentlichen die Form eines Halbkreises haben.

4. Ausgabemagazin nach einem der Ansprüche 1-3, **dadurch gekennzeichnet,** daß die Ausgabe-/Auffüllstation aus einem Bedienhebelsystem (7) besteht, das mit dem Tablett (5) in Kontakt gebracht werden kann und geeignet ist, das Tablett in der vorgesehenen Weise nach außen in die Entnahme-/Auffüllstation zu drehen.

5. Ausgabemagazin nach einem der oben genannten Ansprüche, **dadurch gekennzeichnet,** daß der Haltepunkt für den Paternostermechanismus Teil des Ausgabe-/Auffüllmoduls ist, und daß die Position der Ausgabe-/Auffüllstation in der Höhe verstellbar ist.

## Revendications

1. Dispositif de stockage muni d'un système de distribution pour différents articles qui sont stockés par lots du même type, par exemple en vue d'un assemblage, dans lequel les lots d'articles sont stockés sur des supports (5) portés par un système (1) à chaîne sans fin circulant verticalement, et un article est guidé spécifiquement vers au moins un poste de distribution/approvisionnement (3), caractérisé en ce que les supports (5) peuvent être extraits vers le poste de distribution/approvisionnement (3) par pivotement hors du trajet de déplacement du système à chaîne circulant verticalement.

2. Dispositif de stockage muni d'un système de distribution selon la revendication 1, caractérisé en ce que chaque support (5) peut être pivoté autour d'un arbre vertical.

3. Dispositif de stockage muni d'un système de distribution selon la revendication 2, caractérisé en ce que les supports (5) sont de forme essentiellement semi-circulaire.

4. Dispositif de stockage muni d'un système de distribution selon l'une quelconque des revendications 1-3, caractérise en ce que le poste de distribution/approvisionnement comprend un système à levier d'actionnement (7) qui peut être tourné pour être amené en contact avec le support (5) dans le but de faire tourner le support vers l'extérieur, de manière commandée, en direction du poste de distribution/approvisionnement.

5. Dispositif de stockage muni d'un système de distribution selon l'une quelconque des revendications précédentes, caractérisé en ce que le point d'arrêt commandé du système à chaîne circulant verticalement est relié au module de distribution/approvisionnement, et en ce que la position du poste de distribution/approvisionnement est ajustable verticalement.
